# EUROPÄISCHE PATENTSCHRIFT

(11) **EP 2 356 390 B1**
(45) Veröffentlichungstag und Bekanntmachung des Hinweises auf die Patenterteilung: **07.03.2018**
(21) Anmeldenummer: 09799389.3
(22) Anmeldetag: 09.12.2009
(51) Int. Cl.: F27B 7/26

(54) **VORRICHTUNG ZUM ÜBERTRAGEN EINES DREHMOMENTS AUF EINEN DREHROHFEN**
DEVICE FOR THE TORQUE TRANSFER TO A ROTARY KILN
DISPOSITIF DE TRANSMISSION DE COUPLE À UN FOUR TUBULAIRE TOURNANT

(30) Priorität: 09.12.2008 AT 19132008
(43) Veröffentlichungstag der Anmeldung: 17.08.2011
(73) Patentinhaber: Holcim Technology Ltd., 8645 Rapperswil-Jona (CH); CMD Engrenages Et Réducteurs, 59405 Cambrai-Cedex (FR)
(72) Erfinder: BURKHALTER, René, CH-5022 Rombach (CH); CHICHERY, Laurent, F-59405 Cambrai-Cedex (FR)
(74) Vertreter: Keschmann, Marc
(86) Internationale Anmeldenummer: PCT/IB2009/007699
(87) Internationale Veröffentlichungsnummer: WO 2010/067183

(56) Entgegenhaltungen:
- EP-A1- 0 021 038
- EP-A1- 0 570 696
- DE-A1- 4 313 306
- DE-U1- 9 013 226
- FR-A- 1 401 324

## Beschreibung

Die Erfindung bezieht sich auf eine Vorrichtung zum Übertragen eines Drehmoments auf einen Drehrohrofen mit einer von einem Motor angetriebenen Antriebswelle mit einem Antriebsritzel, das einen mit dem Drehrohrofen verbundenen Zahnkranz antreibt.

Vorrichtungen zur Übertragung einer Drehbewegung auf einen Zahnkranz sind beispielsweise der DE 1450712 A oder der FR 1401324 A zu entnehmen. Für den Drehantrieb von Drehrohröfen sind eine Reihe derartiger Antriebe entwickelt worden, wobei aufgrund des großen Gewichts der Öfen relativ hohe Drehmomente übertragen werden müssen und gleichzeitig den thermischen Ausdehnungen oder dgl. des Drehrohrofens Rechnung getragen werden muss. Aufgrund der thermischen Ausdehnung des Ofens bzw. Positionsänderungen des Drehrohrofens, die durch Migration oder thermische Verformungen des Drehrohrofens hervorgerufen werden, und einem daraus resultierenden Taumeln des Drehrohrofenzahnkranzes sind Bewegungen des mit dem Drehrohrofen verbundenen Zahnkranzes in Achsrichtung weit über 100 mm möglich. Bei einer derartigen axialen Verschiebung des Zahnkranzes soll der Antrieb immer noch zuverlässig in Eingriff bleiben, wobei weiters naturgemäß die Antriebswelle selbst weitestgehend entlastet werden muss, um sie von Biegekräften freizuhalten. Es ist daher bekannt, das Antriebsritzel, welches mit dem Zahnkranz kämmt, in einem Lagergehäuse aufzunehmen und abzustützen. Mit derartigen Konstruktionen gelingt es zwar, den Antrieb entsprechend zu stabilisieren, die auf Grund der Bewegungen des Drehrohrofens auftretenden axialen und ggf. radialen Verschiebungen müssen aber am Eingriff des mit dem Zahnkranz kämmenden Ritzels aufgenommen werden, was auf Grund der dort zu übertragenden großen Kräfte beispielsweise zu Schäden führen kann.

Die vorliegende Erfindung zielt daher darauf ab, eine Einrichtung zum Übertragen eines Drehmoments auf einen Drehrohrofen der eingangs genannten Art dahingehend zu verbessern, dass die Bewegungen des Drehrohrofens und damit des Zahnkranzes sicher kompensiert werden können.

Zur Lösung dieser Aufgabe ist die Ausbildung erfindungsgemäß so getroffen, dass das Antriebsritzel den Zahnkranz unter Zwischenschaltung eines Getriebes antreibt, wobei ein Zahnrad des Getriebes in axialer Richtung verschieblich mit dem Antriebsritzel in Eingriff steht. Dadurch, dass die Aufnahme der axialen Verschiebungen des Zahnkranzes nicht am Eingriff des mit dem Zahnkranz kämmenden Ritzels erfolgt, sondern am Eingriff eines Zahnrads des zwischen Antriebsritzel und Zahnkranz geschalteten Getriebes mit dem Antriebsritzel, kann der axial verschiebbare Eingriff für wesentlich geringere Kräfte ausgelegt werden. Dies ist insbesondere dann der Fall, wenn das Getriebe, wie dies in der Regel beim Antrieb eines Drehrohrofens üblich ist, als Untersetzungsgetriebe ausgebildet ist, da die jeweils in Eingriff stehenden Zähne der Zahnräder antriebsseitig wesentlich geringere Kräfte übertragen müssen als abtriebsseitig. Bei der erfindungsgemäßen Ausbildung ist lediglich für eine geeignete axiale und ggf. radiale Führung des Getriebes gemeinsam mit dem Zahnkranz Sorge zu tragen, damit das Getriebe die durch die Bewegungen des Drehrohrofens verursachten Lageänderungen des Zahnkranzes gemeinsam mit dem Zahnkranz ausführt.

Um einen sicheren Eingriff des Antriebsritzels mit dem Zahnrad des Getriebes auch bei gegenseitiger axialer Verschiebung zu gewährleisten, ist die Ausbildung bevorzugt derart getroffen, dass die Breite des mit dem Antriebsritzel in Eingriff stehenden Zahnrades des Getriebes kleiner ist als die Breite des Antriebsritzels. Dabei ist das Getriebe vorzugsweise um ca. 160 mm in axialer Richtung verschiebbar.

Wie bereits erwähnt ist bei der erfindungsgemäßen Ausbildung das Getriebe gemeinsam mit dem mit dem Drehrohrofen verbundenen Zahnkranz in axialer Richtung verstellbar gelagert. Die entsprechende Abstützung erfolgt bevorzugt dadurch, dass das Getriebe mit Hilfe einer Stützstange an einer ortsfesten Struktur abgestützt ist. Bevorzugt erlaubt die Stützstange dabei eine wenigstens einachsige, vorzugsweise zweiachsige Verlagerung des Getriebes, um der auf Grund der Bewegungen des Drehrohrofens auftretenden Lageänderung besonders gut Rechnung tragen zu können.

Eine entsprechend gute Führung des Getriebes kann dadurch gewährleistet werden, dass die Stützstange am Getriebe und an der ortsfesten Struktur jeweils schwenkbar angelenkt ist, wobei mit Vorteil die Stützstange an der ortsfesten Struktur ein zweiachsiges Gelenk und getriebeseitig ein einachsiges Gelenk aufweist.

Die Schwenkachsen sind bevorzugt derart angeordnet, dass eine Schwenkachse der schwenkbaren Anlenkung der Stützstange parallel zur Drehachse des Drehrohrofens verläuft, und dass wenigstens eine Schwenkachse der schwenkbaren Anlenkung der Stützstange normal zur Drehachse des Drehrohrofens verläuft. Die parallel zur Drehrohrofenachse verlaufende Schwenkachse erlaubt dabei eine Änderung des Abstands des Getriebes zur Drehrohrofenachse. Die normal zur Drehachse des Drehrohrofens verlaufende Schwenkachse erlaubt eine Führung des Getriebes in axialer Richtung.

Bei der beschriebenen Abstützung werden mit Rücksicht auf die Nachführbarkeit des Getriebes mit dem Zahnkranz und den axial verschieblichen Eingriff des Getriebes mit dem Antriebsritzel bei einer lediglich axialen Bewegung des Zahnkranzes keine Kräfte in die Antriebswelle eingeleitet. Wenn aber auch eine radiale Bewegungskomponente auftritt, muss ein entsprechender Ausgleich in der Antriebswelle erfolgen und es ist die Ausbildung in diesem Zusammenhang bevorzugt derart getroffen, dass zwischen der Antriebswelle und dem Antriebsmotor wenigstens ein Kardangelenk angeordnet ist. Dabei kann die kardanische Anlenkung der Antriebswelle am Motor in besonders bevorzugter Weise auch als homokinetisches Gelenk ausgebildet sein, sodass auch im abgewinkelten Zustand eine ruckfreie Drehmomentübertragung gewährleistet ist.

Um das Getriebe in ständigem Eingriff mit dem Zahnkranz zu halten, ist die erfindungsgemäße Vorrichtung bevorzugt derart weitergebildet, dass das Getriebe mit dem Zahnkranz und/oder dem Drehrohrofen zusammenwirkende Führungsmittel aufweist, sodass das Getriebe den axialen und ggf. radialen Bewegungen des Zahnkranzes folgt. Die Führungsmittel sind dabei mit Vorteil von am Getriebe, insbesondere der Welle, angeordneten Ringen gebildet, die am Außenumfang des Zahnkranzes geführt sind. Die Rollen laufen am Außenumfang des Zahnkranzes ab und stellen sicher, dass das Getriebe mit dem Zahnkranz in Eingriff steht. Um bei einem Rücklaufen oder Stehenbleiben des Drehrohrofens den Kontakt zwischen Getriebe und Zahnkranz sicherzustellen, sind auch weitere Rollen am Innenumfang des Zahnkranzes vorgesehen.

Eine thermisch belastbare Anordnung des Zahnkranzes an dem Drehrohrofen kann in an sich bekannter Weise so erfolgen, dass der Zahnkranz über tangential am Umfang des Drehrohrofens abgestützte Platten mit dem Drehrohrofen verbunden ist.

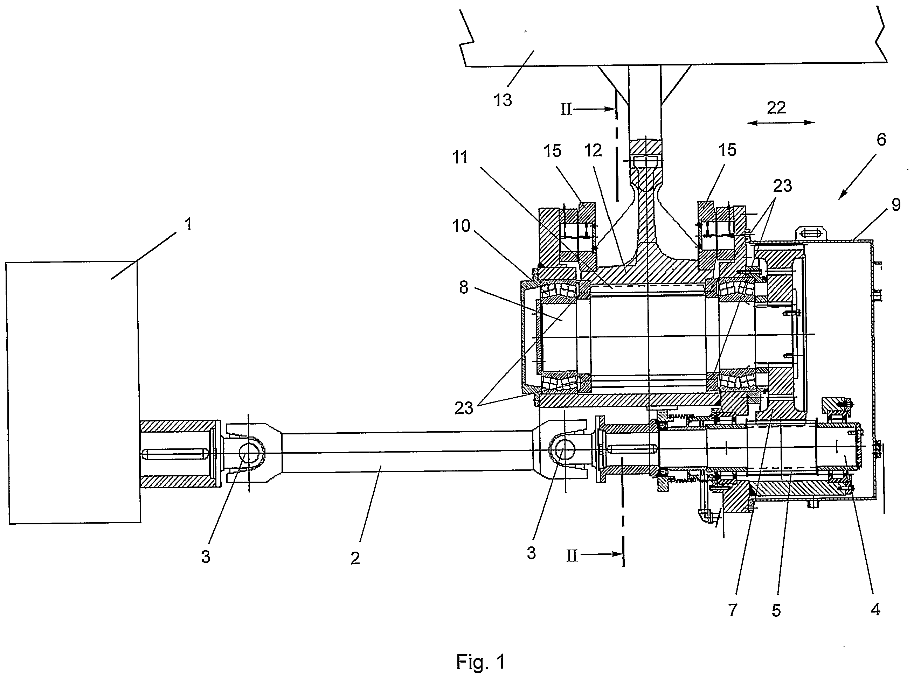

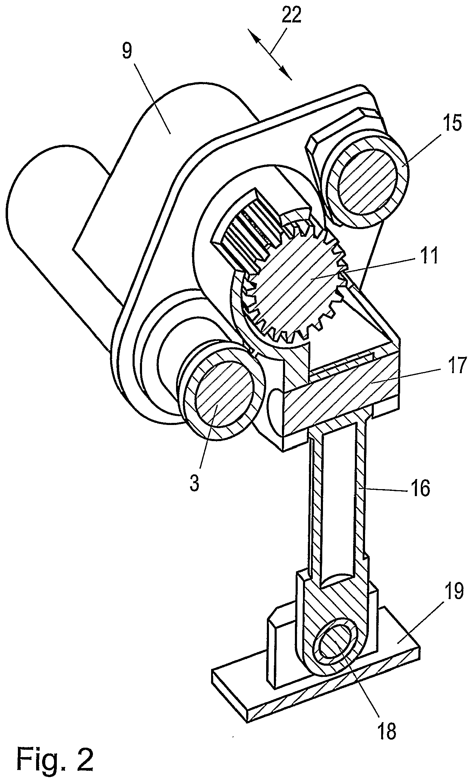

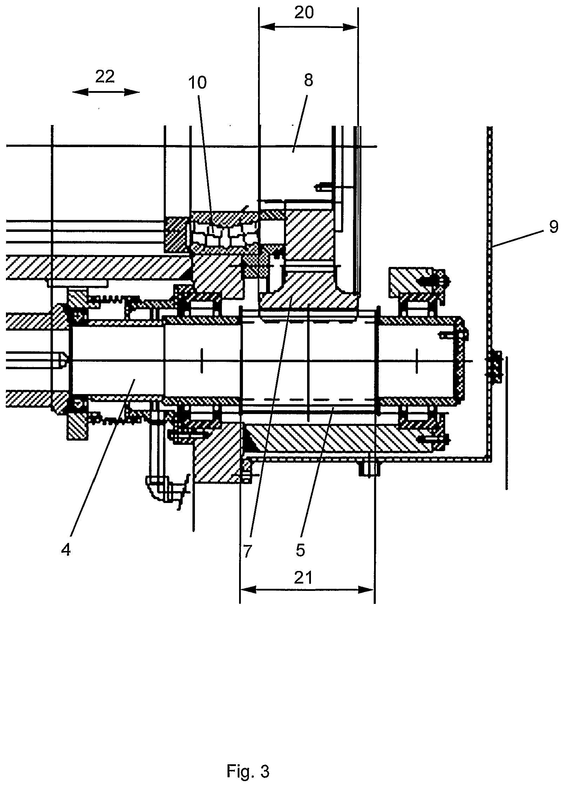

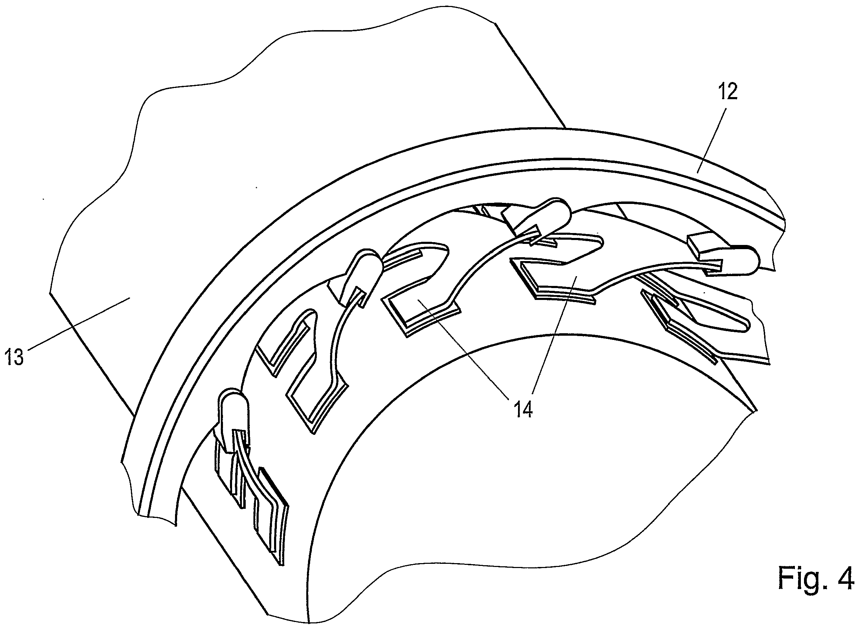

Die Erfindung wird nachfolgend anhand eines in der Zeichnung schematisch dargestellten Ausführungsbeispiels näher erläutert. In dieser zeigen Fig.1 eine Aufsicht auf die erfindungsgemäße Antriebsvorrichtung, Fig.2 einen Schnitt nach der Linie II-II der Fig.1 in perspektivischer Ansicht, Fig.3 eine vergrößerte Darstellung der Antriebssituation und Fig. 4 eine Detailansicht eines an einem Drehrohrofen festgelegten Zahnkranzes.

In Fig.1 ist mit 1 ein Motor bezeichnet, welcher über ein mit Kardangelenken 3 angelenktes Zwischenstück 2 die Antriebswelle 4 in Rotation versetzt. Die Antriebswelle 4 ist mit einem Antriebsritzel 5 versehen, welches mit einem Zahnrad 7 des Getriebes, insbesondere Untersetzungsgetriebes, 6 in Eingriff steht. Das Zahnrad 7 treibt eine Welle 8 an, welche im Gehäuse 9 in Wälzlagern 10 gelagert und mit einem Ritzel 11 versehen ist. Das Ritzel 11 kämmt mit dem Zahnkranz 12, der über tangential am Umfang des Drehrohrofens 13 abgestützte Platten 14 mit dem Drehrohrofen 13 verbunden ist. Das Ritzel 11 wird hierbei über auf der Außenseite des Zahnkranzes 12 laufende Ringe 23 in Eingriff mit dem Zahnkranz 12 gehalten. Am Innenumfang des Zahnkranzes laufende Rollen 15 halten den Kontakt zwischen Zahnkranz und Ritzel bei einem rückläufigen oder stehenden Drehrohrofen aufrecht.

Auf Grund von thermischen Ausdehnungen oder Kontraktionen sowie der normalen Axialbewegung des Drehrohrofens kann es zu Verschiebungen des Zahnkranzes 12 in Richtung des Doppelpfeils 22 kommen. Das Getriebe 6, das mit den Ringen 23 am Zahnkranz geführt ist, folgt dieser Verschiebebewegung. Das Getriebe steht mit seinem Zahnrad 7 in axialer Richtung verschieblich mit dem Antriebsritzel 5 in Eingriff, sodass der Antrieb des Drehrohrofens unabhängig von der axialen Verschiebeposition des Zahnkranzes 12 sichergestellt ist. Der Umstand, dass die Breite des Antriebsritzels 5 die Breite des Zahnrades 7 übersteigt, sichert den Eingriff über den gesamten Verschiebeweg.

Fig. 2 zeigt einen Schnitt nach der Linie II-II der Fig.1 in perspektivischer Ansicht, wobei hier die Stützstange 16 ersichtlich ist, die in Fig.1 vom Getriebe 6 verdeckt ist. Getriebeseitig ist die Stützstange 16 in einem einachsigen Gelenk 17 gelagert. Auf Seiten des Fundaments 19 ist die Stützstange 16 mittels eines zweiachsigen Gelenks 18 am Fundament 19 gelagert. Die Stützstange 16 trägt das Gewicht des Getriebes 6 und übernimmt die Kraft resultierend aus dem Antriebsmoment. Sie erlaubt es dem Getriebe, dem Zahnkranz 12 bei thermischen Ausdehnungen und dgl. zu folgen.

Fig.3 zeigt den Bereich des Eingriffs zwischen dem auf der Antriebswelle 4 angeordneten Antriebsritzel 5 und dem Zahnrad 7. Die Breite des Zahnrades 7 ist mit 20 bezeichnet und die Breite des Antriebsritzels 5 mit 21. Das Ausmaß der axialen Verschieblichkeit in Richtung des Doppelpfeils 22 berechnet sich aus der Differenz der Breiten 20 und 21, wobei das Spiel in jede Richtung der Hälfte dieser Differenz entspricht.

Fig.4 zeigt die tangential am Umfang des Drehrohrofens 13 abgestützten Platten 14, welche den Drehrohrofen 13 mit dem angetriebenen Zahnkranz 12 verbinden. Durch die federnde Wirkung der Platten 14 kann eine thermische Ausdehnung des Drehrohrofens in einfacher Weise ausgeglichen werden. Die Länge der tangentialen Platten ist so gewählt, dass sie ein Anbringen an unterschiedliche Drehrohrofengrößen innerhalb des Anwendungsbereichs erlauben. Die Dicke und Form der tangentialen Platten werden als Variablen in einer Torsionsanalyse bei fixem Drehrohrofendurchmesser verwendet und so verändert, dass im Bereich der Betriebsgeschwindigkeit keine Eigenfrequenzen von einem der Antriebsteile angeregt werden.

## Patentansprüche

1. Vorrichtung zum Übertragen eines Drehmoments auf einen Drehrohrofen (13) mit einer von einem Motor (1) angetriebenen Antriebswelle (4) mit einem Antriebsritzel (5), das einen mit dem Drehrohrofen (13) verbindbaren Zahnkranz (12) antreibt, **dadurch gekennzeichnet, dass** das Antriebsritzel (5) den Zahnkranz (12) unter Zwischenschaltung eines Getriebes (6) antreibt, **dadurch gekennzeichnet, dass** ein Zahnrad (7) des Getriebes (6) in axialer Richtung relativ zum Antriebsritzel (5) verschieblich ist und axial verschieblich mit dem Antriebsritzel (5) in Eingriff steht.

2. Vorrichtung nach Anspruch 1, **dadurch gekennzeichnet, dass** die Breite (20) des mit dem Antriebsritzel (5) in Eingriff stehenden Zahnrades (7) des Getriebes (6) kleiner ist als die Breite (21) des Antriebsritzels (5).

3. Vorrichtung nach Anspruch 1 oder 2, **dadurch gekennzeichnet, dass** ein Abtriebsritzel (11) des Getriebes (6) mit dem Zahnkranz (12) in Eingriff steht.

4. Vorrichtung nach Anspruch 1, 2 oder 3, **dadurch gekennzeichnet, dass** das Getriebe (6) mit Hilfe einer Stützstange (16) an einer ortsfesten Struktur (19) abgestützt ist.

5. Vorrichtung nach Anspruch 4, **dadurch gekennzeichnet, dass** die Stützstange (16) eine wenigstens einachsige, vorzugsweise zweiachsige Verlagerung des Getriebes (6) erlaubt.

6. Vorrichtung nach Anspruch 4 oder 5, **dadurch gekennzeichnet, dass** die Stützstange (16) am Getriebe (6) und an der ortsfesten Struktur (19) jeweils schwenkbar angelenkt ist.

7. Vorrichtung nach Anspruch 6, **dadurch gekennzeichnet, dass** eine Schwenkachse der schwenkbaren Anlenkung der Stützstange (16) parallel zur Drehachse des Drehrohrofens (13) verlaufbar ist.

8. Vorrichtung nach Anspruch 6 oder 7, **dadurch gekennzeichnet, dass** wenigstens eine Schwenkachse der schwenkbaren Anlenkung der Stützstange (16) normal zur Drehachse des Drehrohrofens (13) verlaufbar ist.

9. Vorrichtung nach einem der Ansprüche 5 bis 8, **dadurch gekennzeichnet, dass** die Stützstange (16) an der ortsfesten Struktur (19) ein zweiachsiges Gelenk (18) und getriebeseitig ein einachsiges Gelenk (17) aufweist.

10. Vorrichtung nach einem der Ansprüche 1 bis 9, **dadurch gekennzeichnet, dass** zwischen der Antriebswelle (4) und dem Antriebsmotor (1) wenigstens ein Kardangelenk (3) angeordnet ist.

11. Vorrichtung nach einem der Ansprüche 1 bis 10, **dadurch gekennzeichnet, dass** das Getriebe (6) mit dem Zahnkranz (12) zusammenwirkende Führungsmittel aufweist, sodass das Getriebe (6) den axialen und ggf. radialen Bewegungen des Zahnkranzes (12) folgt.

12. Vorrichtung nach Anspruch 11, **dadurch gekennzeichnet, dass** die Führungsmittel von am Getriebe (6), insbesondere der Welle (8), angeordneten Ringen (23) gebildet sind, die am Außenumfang des Zahnkranzes (12) geführt sind.

13. Vorrichtung nach einem der Ansprüche 1 bis 12, **dadurch gekennzeichnet, dass** das Getriebe (6) um etwa 160 mm axialer Richtung (22) verschiebbar ist.

14. Ein Drehrohrofen und eine Vorrichtung nach einem der Ansprüche 1 bis 13, **dadurch gekennzeichnet, dass** der Zahnkranz (12) über tangential am Umfang des Drehrohrofen (13) abgestützte Platten (14) mit dem Drehrohrofen (13) verbunden ist.

## Claims

1. A device for transmitting a torque to a rotary kiln (13), including a drive shaft (4) driven by a motor (1) and having a drive opinion (5) driving a gear rim (12) connected to the rotary kiln (13), **characterized in that** the drive pinion (5) drives the gear rim (12) via an interposed transmission (6), **characterized in that** a gear wheel (7) of the transmission (6) is displaceable in the axial direction relatively to the drive pinion (5) and engages with the drive pinion (5) in a manner displaceable in the axial direction.

2. A device according to claim 1, **characterized in that** the width (20) of the gear wheel (7) of the transmission (6) engaging with the drive pinion (5) is smaller than the width (21) of the drive pinion (5).

3. A device according to claim 1 or 2, **characterized in that** a driven pinion (11) of the transmission (6) engages with the gear rim (12).

4. A device according to claim 1, 2 or 3, **characterized in that** the transmission (6) is supported on a stationary structure (19) by the aid of a support rod (16).

5. A device according to claim 4, **characterized in that** the support rod (16) allows for an at least single-axle, preferably double-axle, shift of the transmission (6).

6. A device according to claim 4 or.5, **characterized in that** the support rod (16) is each pivotally hinged to the transmission (6) and to the stationary structure (19).

7. A device according to claim 6, **characterised in that** a pivot axis of the pivotable hinge connection of the support rod (16) extends parallel with the axis of rotation of the rotary kiln (13).

8. A device according to claim 6 or 7, **characterized in that** at least one pivot axis of the pivotable hinge connection of the support rod (16) extends normal to the axis of rotation of the rotary kiln (13).

9. A device according to any one of claims 5 to 8, **characterized in that** the support rod (16) comprises a double-axle hinge (18) on the stationary structure (19) and a single-axle hinge (17) on the transmission side.

10. A device according to any one of claims 1 to 9, **characterized in that** at least one universal joint (3) is arranged between the drive shaft (4) and the drive motor (1).

11. A device according to any ane of claims 1 to 10, **characterized in that** the transmission (6) comprises guide means cooperating with the gear rim (12) in a manner that the transmission (6) follows the axial and optionally radial movements of the gear rim (12).

12. A device according to claim 11, **characterized in that** the guide means are comprised of races (23) arranged on the transmission (6), particularly on the shaft (8), and guided on the outer periphery of the gear rim (12).

13. A device according to any one of claims 1 to 12, **characterized in that** the transmission (6) is displaceable in the axial direction (22) by about 160 mm.

14. A rotary kiln and a device according to any one of claims 1 to 13, **characterized in that** the gear rim (12) is connected to the rotary kiln (13) via plates (14) tangentially supported on the periphery of the rotary kiln (13).

## Revendications

1. Dispositif de transmission d'un couple à un four tubulaire tournant (13) avec un arbre d'entraînement (4) entraîné par un moteur (1) avec un pignon d'entraînement (5) qui entraîne une couronne dentée (12) pouvant être raccordée au four tubulaire tournant (13), **caractérisé en ce que** le pignon d'entraînement (5) entraîne la couronne dentée (12) en intercalant un engrenage (6), **caractérisé en ce qu'**une roue dentée (7) de l'engrenage (6) est mobile dans le sens axial par rapport au pignon d'entraînement (5) et se trouve en prise de manière mobile axialement avec le pignon d'entraînement (5).

2. Dispositif selon la revendication 1, **caractérisé en ce que** la largeur (20) de la roue dentée (7) se trouvant en prise avec le pignon d'entraînement (5) de l'engrenage (6) est inférieure à la largeur (21) du pignon d'entraînement (5).

3. Dispositif selon la revendication 1 ou 2, **caractérisé en ce qu'**un pignon de sortie (11) de l'engrenage (6) est en prise avec la couronne dentée (12).

4. Dispositif selon la revendication 1, 2 ou 3, **caractérisé en ce que** l'engrenage (6) est en appui à l'aide d'une tige d'appui (16) sur une structure fixe (19).

5. Dispositif selon la revendication 4, **caractérisé en ce que** la tige d'appui (16) permet un déplacement au moins à un axe, de préférence à deux axes de l'engrenage (6).

6. Dispositif selon la revendication 4 ou 5, **caractérisé en ce que** la tige d'appui (16) est articulée respectivement de manière pivotante à l'engrenage (6) et à la structure fixe (19).

7. Dispositif selon la revendication 6, **caractérisé en ce qu'**un axe de pivotement de l'articulation pivotante de la tige d'appui (16) peut être étendu parallèlement à l'axe de rotation du four tubulaire tournant (13).

8. Dispositif selon la revendication 6 ou 7, **caractérisé en ce qu'**au moins un axe de pivotement de l'articulation pivotante de la tige d'appui (16) peut être étendu normalement à l'axe de rotation du four tubulaire tournant (13).

9. Dispositif selon l'une quelconque des revendications 5 à 8, **caractérisé en ce que** la tige d'appui (16) présente sur la structure fixe (19) une articulation à deux axes (18) et côté engrenage une articulation à un axe (17).

10. Dispositif selon l'une quelconque des revendications 1 à 9, **caractérisé en ce qu'**au moins un joint de Cardan (3) est agencé entre l'arbre d'entraînement (4) et le moteur d'entraînement (1).

11. Dispositif selon l'une quelconque des revendications 1 à 10, **caractérisé en ce que** l'engrenage (6) présente des moyens de guidage coopérant avec la couronne dentée (12) de sorte que l'engrenage (6) suive les déplacements axiaux et éventuellement radiaux de la couronne dentée (12).

12. Dispositif selon la revendication 11, **caractérisé en ce que** les moyens de guidage sont formés par des anneaux (23) agencés sur l'engrenage (6), en particulier l'arbre (8) qui sont guidés sur la périphérie extérieure de la couronne dentée (12).

13. Dispositif selon l'une quelconque des revendications 1 à 12, **caractérisé en ce que** l'engrenage (6) est mobile d'environ 160 mm dans le sens axial (22).

14. Four tubulaire tournant et dispositif selon l'une quelconque des revendications 1 à 13, **caractérisés en ce que** la couronne dentée (12) est raccordée par le biais de plaques (14) en appui tangentiel sur la périphérie du four tubulaire tournant (13) au four tubulaire tournant (13).
